# EUROPEAN PATENT APPLICATION

(11) **EP 4 810 762 A1**
(43) Date of publication of application: **23.09.2026**
(21) Application number: 26165865.2
(22) Date of filing: 18.03.2026
(51) Int. Cl.: F01D 5/14

(54) **AIRFOIL WITH A SPECIFIC CONCAVE PRESSURE SIDE**

(30) Priority: 18.03.2025 KR 20250034665
(71) Applicant: Doosan Enerbility Co., Ltd., Seongsan-gu Changwon-si, Gyeongsangnam-do 51711 (KR)
(72) Inventor: PARK, Inhyung, 08029 Seoul (KR)
(74) Representative: Ter Meer Steinmeister & Partner

(57) **Abstract**

An airfoil, wherein the airfoil includes a front portion (2100) extending rearward from a leading edge and a rear portion (2300) extending from the front portion to a trailing edge, and a pressure surface (2130) of the front portion is concave more than a pressure surface of the rear portion.

## Description

The application claims priority to Korean Patent Application No. 10-2025-0034665, filed March 18, 2025.

### BACKGROUND OF THE INVENTION

### Field of the Invention

The present disclosure relates to an airfoil and a gas turbine including the same.

### Description of the Related Art

A turbine is a mechanical device that generates rotational force by impulse or reaction using a flow of compressible fluid, such as steam or gas. The turbine includes a steam turbine that uses steam, a gas turbine that uses high-temperature combustion gas, and the like.

Among them, the gas turbine is primarily composed of a compressor, a combustion chamber, and a turbine. The compressor has a structure similar to the turbine. However, the turbine generates energy by rotation of turbine blades, while the compressor consumes energy to rotate compressor blades.

Unlike turbine blades with high-curvature airfoils that generate large rotational torque, compressor blades use airfoils with a gently curved, nearly flat shape to minimize energy loss from flow separation and vortex formation.

However, when the gently curved airfoils are applied to compressor blades or vanes, the flexibility to respond to changes in incidence angles is reduced, making it difficult to operate over a wide range of incidence angles. Then, even small changes in incidence angles readily cause flow separation, thereby reducing compression efficiency.

### SUMMARY OF THE INVENTION

An objective of the present disclosure is to provide an airfoil and a gas turbine including the same, the airfoil being capable of being operated within a wide range of incidence angles and improving compression efficiency.

According to the embodiment of the present disclosure, there is provided an airfoil, which including: a front portion extending rearward from a leading edge; and a rear portion extending from the front portion to a trailing edge, wherein a pressure surface of the front portion may be concave more than a pressure surface of the rear portion.

In the airfoil according to the embodiment of the present disclosure, the front portion may be located in a region where a distance from the leading edge is less than or equal to 40% of a distance from the leading edge to the trailing edge.

In the airfoil according to the embodiment of the present disclosure, the front portion may have a greater curvature than the rear portion.

In the airfoil according to the embodiment of the present disclosure, the airfoil may further include: a front camber line formed along center points between the pressure surface and a suction surface of the front portion; and a rear camber line formed along center points between the pressure surface and a suction surface of the rear portion, wherein the front camber line may have a greater curvature than the rear camber line.

In the airfoil according to the embodiment of the present disclosure, a ratio of a turning angle formed by the front portion to a total turning angle of air flowing from the leading edge to the trailing edge may be equal to or greater than 0.6.

In the airfoil according to the embodiment of the present disclosure, a ratio of a turning angle formed by the front portion to a total turning angle may be less than or equal to 0.9.

In the airfoil according to the embodiment of the present disclosure, a maximum thickness of the rear portion may be thicker than a maximum thickness of the front portion.

In the airfoil according to the embodiment of the present disclosure, a maximum thickness location of the airfoil may be located in the rear portion.

In the airfoil according to the embodiment of the present disclosure, the maximum thickness location may be located in a region where a distance from the leading edge is greater than 40% and less than 100% of a distance from the leading edge to the trailing edge.

According to an embodiment of the present disclosure, there is provided a gas turbine, which includes: a compressor configured to compress inflow air, and including multiple stages of compressor blades installed radially, and a compressor vane installed between the multiple stages of compressor blades; a combustor configured to mix and burn air compressed by the compressor with fuel; and a turbine configured to generate power with gas burned by the combustor, wherein at least one of the compressor blade and the compressor vane may include an airfoil, wherein the airfoil may include: a front portion extending rearward from a leading edge; and a rear portion extending from the front portion to a trailing edge, wherein a pressure surface of the front portion may be concave more than a pressure surface of the rear portion.

In the gas turbine according to the embodiment of the present disclosure, the front portion may be located in a region where a distance from the leading edge is less than or equal to 40% of a distance from the leading edge to the trailing edge.

In the gas turbine according to the embodiment of the present disclosure, the front portion may have a greater curvature than the rear portion.

In the gas turbine according to the embodiment of the present disclosure, a ratio of a turning angle formed by the front portion to a total turning angle of air flowing from the leading edge to the trailing edge may be equal to or greater than 0.6 and less than or equal to 0.9.

In the gas turbine according to the embodiment of the present disclosure, a maximum thickness location of the airfoil may be located in the rear portion.

In the gas turbine according to the embodiment of the present disclosure, the maximum thickness location may be located in a region where a distance from the leading edge is greater than 40% and less than 100% of a distance from the leading edge to the trailing edge.

When the airfoil according to the embodiment of the present disclosure is used in compressor blades or compressor vanes, the gas turbine compressor can be operated over a wide range of incidence angles, thereby reducing energy loss and improving compression efficiency.

### BRIEF DESCRIPTION OF THE DRAWINGS

FIG. 1 is a perspective view showing a partially cut gas turbine according to an embodiment of the present disclosure.
FIG. 2 is a sectional view showing an inner structure of the gas turbine according to the embodiment of the present disclosure.
FIG. 3 is a view showing a compressor blade using an airfoil of the gas turbine according to the embodiment of the present disclosure.
FIG. 4 is a view showing a compressor vane using the airfoil of the gas turbine according to the embodiment of the present disclosure.
FIG. 5 is a top-sectional view of the airfoil, the view being taken along section A-A of FIG. 3.
FIG. 6 is a view showing a camber ratio of the airfoil of FIG. 5.
FIG. 7A is a view showing isentropic Mach number distribution of a conventional airfoil.
FIG. 7B is a view showing isentropic Mach number distribution of the airfoil of the gas turbine according to the embodiment of the present disclosure.
FIG. 8 is a view showing the loss bucket in a tip region in comparison to the conventional airfoil.
FIG. 9 is a view showing the loss bucket in a middle region in comparison to the conventional airfoil.
FIG. 10 is a view showing the loss bucket in a hub region in comparison to the conventional airfoil.

### DETAILED DESCRIPTION OF THE DISCLOSURE

The present disclosure may be variously modified and may have various embodiments, so examples of which are illustrated in the accompanying drawings and will be described in detail in the detailed description. However, it should be understood that the present disclosure is not limited to the embodiments which will be described hereinbelow, and various modifications, equivalents, additions and substitutions are possible without departing from the scope of the present disclosure.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprise", "include", "have", etc., when used in this specification, specify the presence of stated features, integers, steps, operations, elements, components, and/or combinations of them but do not preclude the presence or addition of one or more other features, integers, steps, operations, elements, components, and/or combinations thereof.

Hereinbelow, exemplary embodiments of the present disclosure will be described in detail with reference to the accompanying drawings. When inserting reference numerals into the components in the respective drawings, although the same components are illustrated in the different drawings, they are described to have the same reference numeral as far as possible. Furthermore, detailed descriptions of known functions and configurations which are deemed to make the gist of the present disclosure obscure will be omitted. For the same reason, some components in the accompanying drawings may be exaggerated, omitted, or simplified.

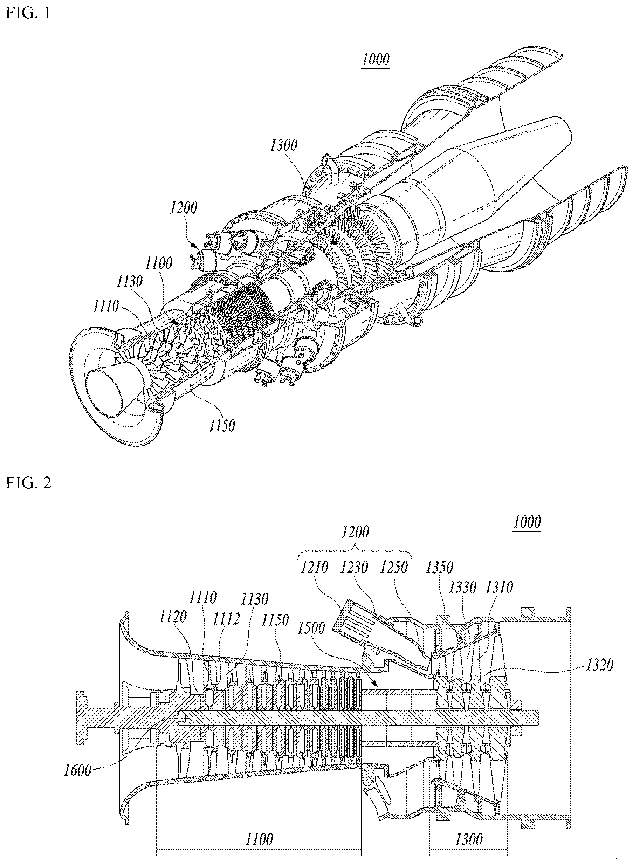

FIG. 1 is a partially cut-perspective view of a gas turbine according to an embodiment of the present disclosure. FIG. 2 is a sectional view showing an inner structure of the gas turbine according to the embodiment of the present disclosure.

In the embodiment, the thermodynamic cycle of a gas turbine 1000 may ideally follow the Brayton cycle. The Brayton cycle includes four processes, which include isentropic compression (adiabatic compression), isobaric heating, isentropic expansion (adiabatic expansion), and isobaric cooling. In other words, due to the Brayton cycle, the gas turbine may suck external air and compress it at high pressure, and then emit thermal energy by combusting fuel in a static pressure environment, and expand the high-temperature combustion gas to change it to kinetic energy and then discharge exhaust gas containing residual energy into the atmosphere. In other words, the thermodynamic cycle may consist of four processes of compression, heating, expansion, and cooling.

As shown in FIG. 1, a gas turbine 1000 implementing the Brayton cycle described above may include a compressor 1100, a combustor 1200, and a turbine 1300. With reference to FIG. 1, the description of the present disclosure may also be broadly used to a turbine engine having the same configuration as the gas turbine 1000 shown in FIG. 1.

Referring to FIG. 1, the compressor 1100 of the gas turbine 1000 may suck and compress external air. The compressor 1100 may supply compressed air from compressor blades 1110 to the combustor 1200, and supply air for cooling to a high-temperature region in the gas turbine 1000 that requires cooling. Herein, since sucked air undergoes the adiabatic compression process in the compressor 1100, the pressure and temperature of the air passing through the compressor 1100 increase.

The compressor 1100 may be driven using a portion of the power output from the turbine 1300. For the large gas turbine 1000, nearly half of the power generated by the turbine 1300 may be consumed to drive the compressor 1100. Therefore, increasing the efficiency of the compressor 1100 directly increases the overall efficiency of the gas turbine 1000.

As shown in FIG. 2, according to the embodiment of the present disclosure, in the gas turbine 1000, the compressor 1100 is located at an upstream location in an air flow direction, and the turbine 1300 is located at a downstream location. A torque tube 1500 is arranged between the compressor 1100 and the turbine 1300 to transmit the rotational torque generated by the turbine 1300 to the compressor 1100.

The compressor 1100 includes a plurality of compressor rotor discs 1120, and each of the compressor rotor discs 1120 is aligned in a shaft direction with a tie rod 1600 providing a rotating shaft and passing through a central portion of each compressor rotor disc. Herein, compressor rotor discs 1120 adjacent to each other are arranged to prevent relative rotation thereof, with opposite surfaces thereof pressed by the tie rod 1600.

The plurality of compressor blades 1110 is radially coupled to the outer circumferential surfaces of the compressor rotor discs 1120. Each compressor blade 1110 is fastened to each compressor rotor disc 1120 through a dovetail member 1112.

The compressor blades 1110 are rotated together with rotation of the compressor rotor discs 1120 and compress the introduced air. As shown in FIG. 2, since the large gas turbine 1000 must compress a large volume of air, a multistage axial compressor is typically used in the large gas turbine 1000. In the multistage axial compressor, air is gradually compressed to high pressure as it passes through the multistage compressor blades 1110.

A compressor vane 1130 is located between the compressor rotor discs 1120. The compressor vane 1130 is arranged between the multistage compressor blades 1110. The compressor vane 1130 is mounted to a compressor casing 1150, and a plurality of compressor vanes 1130 may be mounted thereto in stages.

The compressor vane 1130 is fixed to prevent rotation thereof, unlike the compressor rotor discs 1120. The compressor vane 1130 aligns a compressed air flow moved from the compressor blade 1110 at the front end and guides it toward the compressor blade 1110 at the rear end.

The tie rod 1600 is arranged to pass through the center positions of a plurality of compressor rotor discs 1120 and the center positions of a plurality of turbine rotor discs 1320. The tie rod 1600 may include one tie rod 1600 or a plurality of tie rods 1600. A first end of the tie rod 1600 is fastened to an inner portion of the compressor rotor disc 1120 located at the uppermost stream, and a second end of the tie rod 1600 is fastened with a fixing nut.

The shape of the tie rod 1600 may have various structures with respect to the gas turbine, and it is not necessarily limited to the shape shown in FIG. 2. In other words, as shown in the drawing, the central locations of the compressor rotor discs 1120 and the central locations of the turbine rotor discs 1320 may be penetrated with one tie rod 1600, and each of the central portions may be penetrated with each tie rod 1600.

The air compressed by the compressor 1100 may flow to the combustor 1200. The combustor 1200 may mix compressed air supplied from an outlet of the compressor 1100 with fuel and burns the mixture under uniform pressure combustion to produce high-energy combustion gas.

The combustor 1200 includes a burner 1210 including a fuel nozzle, etc., a liner 1230 forming a combustion chamber, and a transition piece 1250 serving as a connector of the combustor 1200 and the turbine 1300.

The liner 1230 is a tubular member in which a front end thereof is connected to the burner 1210, and an inner space of the liner serves as the combustion chamber. Fuel injected from the fuel nozzle of the burner 1210 is mixed with compressed air of the compressor 1200 in the liner 1230. An ignition plug may be coupled to a side wall of the liner 1230, and the mixed fuel may be ignited by the ignition plug and be burned.

The transition piece 1250 is connected to a rear end of the liner 1230 to deliver the combustion gas toward the turbine 1300. The liner 1230 and the transition piece 1250 may be wrapped with a flow sleeve, thereby forming a double-tube structure. The compressed air penetrates into a ringshape space between the flow sleeve and the transition piece 1250 to flow toward the liner 1230. In this process, the compressed air may cool the transition piece 1250 and the liner 1230, be supplied into the liner 1230, be mixed with the fuel from the fuel nozzle, and then be burned.

The combustion gas from the combustor 1200 is supplied into the turbine 1300. The combustion gas collides with the turbine blade 1310 during expansion to generate a rotational torque, and the rotational torque produced by that is transmitted to the compressor 1100 through a torque tube 1500. Power that exceeds the power required to drive the compressor 1100 is used to drive a generator, etc.

The turbine 1300 has a structure fundamentally- similar to the structure of the compressor 1100. In other words, the turbine 1300 includes a plurality of turbine rotor discs 1320 similar to the compressor rotor discs 1120. Each turbine rotor disc 1320 includes also a plurality of turbine blades 1310 arranged radially. The turbine blades 1310 may also be coupled to the turbine rotor discs 1320 in a dovetail method, etc. The turbine blades 1310 collide with the combustion gas to generate rotational torque.

The turbine vanes 1330 are located between the turbine rotor discs 1320. The turbine vanes 1330 are arranged among the multistage turbine blades 1310. The turbine vanes 1330 are mounted to a turbine casing 1350, and a plurality of turbine vanes 1330 may be mounted in stages.

The turbine vanes 1330 may be fixed to prevent rotation, unlike the turbine rotor disc 1320. The turbine vanes 1330 align a combustion gas flow moved from the turbine blade 1310 at the front end and guide it toward the turbine blade 1310 at the rear end.

Hereinbelow, according to the embodiment of the present disclosure, an airfoil used in the compressor blade and the compressor vane of the gas turbine will be described.

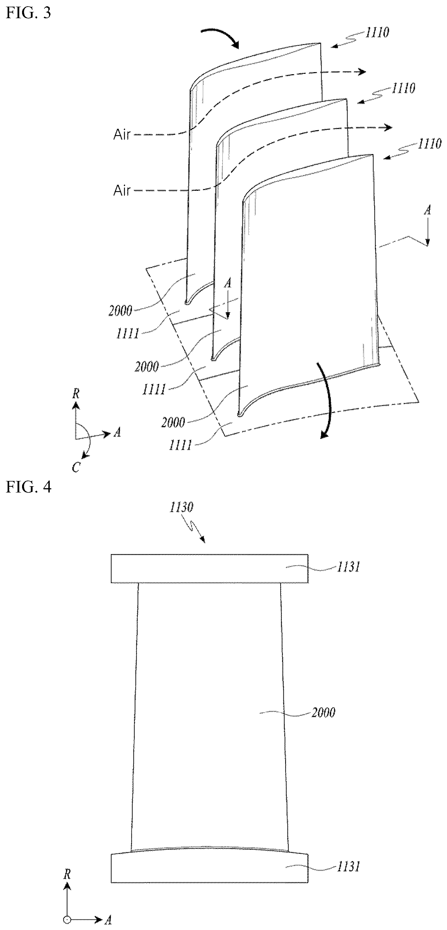

FIG. 3 is a view showing the compressor blade using the airfoil of the gas turbine according to the embodiment of the present disclosure. FIG. 4 is a view showing the compressor vane using the airfoil of the gas turbine according to the embodiment of the present disclosure.

Referring to FIG. 3, the compressor blade 1110 includes a platform 1111 and an airfoil 2000. The platform 1111 is a part of fixing the compressor blade 1110 to the compressor rotor disc 1120 (referring to FIG. 2), and a dovetail member 1112 (referring to FIG. 2) may be formed on a side surface in a circumferential direction (direction C).

The airfoil 2000 may be coupled to an upper portion of the platform 1111 and extend in a radial direction (direction R). A location in the airfoil 2000 radially adjacent to the platform 1111 is a hub (Hub), an end far from the platform 1111 is a tip (Tip), and the region between the hub and the tip is a middle region (Mid).

A plurality of compressor blades 1110 in FIG. 3 is rotated in the circumferential direction (direction C). Air flowing from a front location in a shaft direction (direction A) of the compressor blade 1110 flows toward a rear location in the shaft direction (direction A) along a gap between a pair of compressor blades 1110 adjacent to each other. At this point, air may be compressed as the compressor blades 1110 are rotated.

Referring to FIG. 4, each compressor vane 1130 includes vane carriers 1131 and the airfoil 2000. The vane carriers 1131 are coupled to upper and lower ends of the airfoil 2000 to fix the compressor vane 1130 to a compressor casing 1150 (referring to FIG. 2).

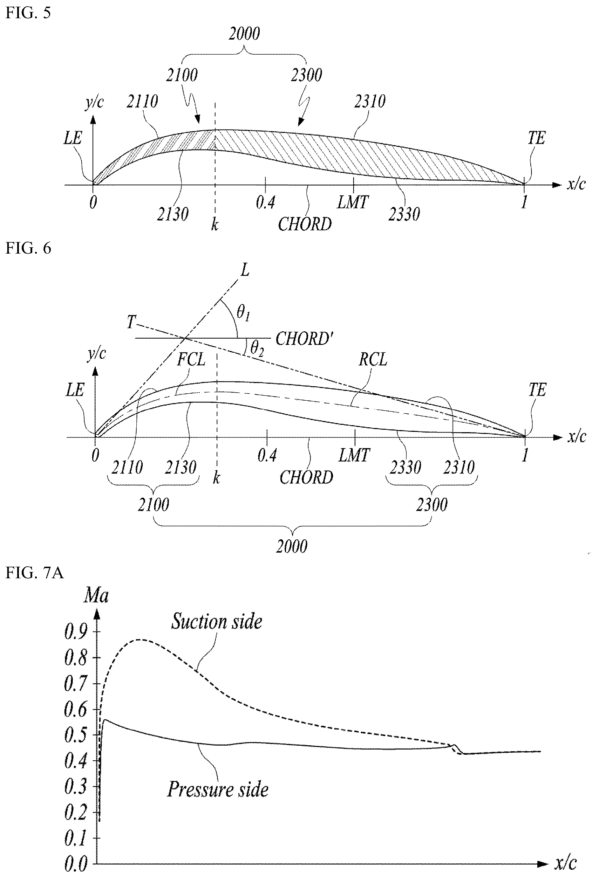

The airfoil 2000 in FIG. 4 may be the same type as the airfoil 2000 of the compressor blade 1110 in FIG. 3. The airfoil 2000 will be described with reference to FIGS. 5 and 6, and the airfoil 2000, which will be described later, may be used in the compressor blade 1110 or/and the compressor vane 1130. In other words, the airfoil 2000, which will be described later, may be used in the compressor blades 1110, in the compressor vane 1130, or in both.

FIG. 5 is a top-sectional view of the airfoil taken along section A-A in FIG. 3. FIG. 6 is a view showing a camber ratio of the airfoil of FIG. 5.

Referring to FIG. 5, the airfoil 2000 includes a front portion 2100 and a rear portion 2300. In a flow direction of air, the front portion 2100 is located in a front region of the airfoil 2000 where a leading edge LE is located, and the rear portion 2300 is located in a rear area of the airfoil 2000 where a trailing edge TE is located.

The front portion 2100 extends rearward from the leading edge LE. The front portion 2100 includes a suction surface 2110 and a pressure surface 2130. The suction surface 2110 of the front portion 2100 has a convex shape, and the pressure surface 2130 of the front portion 2100 has a concave shape at the opposite portion to the suction surface 2110.

The rear portion 2300 is connected to a rear portion of the front portion 2100 and extends to the trailing edge TE. The rear portion 2300 includes a suction surface 2310 and a pressure surface 2330. The suction surface 2310 of the rear portion 2300 may be connected to the suction surface 2110 of the front portion 2100 integrally with each other, and the pressure surface 2330 of the rear portion 2300 may be connected to the pressure surface 2130 of the front portion 2100 integrally with each other. In other words, the airfoil 2000 may be formed by integrating the front portion 2100 and the rear portion 2300.

A flow rate passing through the compressor 1100 (referring to FIG. 2) is faster than a flow rate passing through the turbine 1300 (referring to FIG. 2). Therefore, the compressor 1100 typically uses an airfoil that has a thickness thinner than the airfoil of the turbine 1300 and is streamlined with gradual curvatures in the suction surface and the pressure surface. Furthermore, a location of maximum thickness LMT of the conventional airfoil is typically located in a front region or a middle region of the airfoil.

However, the compressor 1100 of the gas turbine 1000 uses the airfoil 2000 having a shape in which the pressure surface 2130 of the front portion 2100 is concave more than the pressure surface 2330 of the rear portion 2300. In other words, the airfoil 2000 in which the curvature of the front portion 2100 is greater than the curvature of the rear portion 2300, is used in the compressor 1100 of the gas turbine 1000 according to the present disclosure. Furthermore, the airfoil 2000 has the maximum thickness of the rear portion 2300 that is thicker than the maximum thickness of the front portion 2100, so that the location of maximum thickness LMT of the airfoil 2000 is located within the rear portion 2300. Therefore, according to the embodiment, the airfoil 2000 has a front portion 2100 that is thinner and more curved than the rear portion 2300, which forms a hook shape as a whole.

According to the above structure, the airfoil 2000 may increase a load at the front portion 2100 and reduce a load at the rear portion 2300. As a result, air flowing along a surface of the airfoil 2000 is mostly turned at the front portion 2100, and at the rear portion 2300, the air may flow smoothly toward the trailing edge TE, so that flow separation and wake occurrence can be reduced. Accordingly, the compressor 1100 of the gas turbine 1000 using the airfoil 2000 has advantages of improving compression efficiency due to a reduction in energy loss, and of extending the operational region due to operational capability over a wider range of incident angles.

Meanwhile, arbitrary locations X and Y in the airfoil 2000 may be normalized by the length of a chord line CHORD.

When x/c is a value obtained by dividing a distance X from the leading edge LE by a chord length on the chord line CHORD connecting the leading edge LE and the trailing edge TE linearly, x/c indicates a location of normalized X as a dimensionless number. In this case, x/c of the leading edge LE is 0, and x/c of the trailing edge TE is 1.

Furthermore, when y/c is a value obtained by dividing a vertical distance Y from the chord line CHORD by a chord length, y/c indicates a location of normalized Y as a dimensionless number. In this case, y/c of the leading edge LE and y/c of the trailing edge TE are all 0.

When the airfoil 2000 is embodied on a coordinate system with x/c as x-axis and y/c as y-axis, the leading edge LE is located at (0, 0), the trailing edge TE is located at (1, 0), and the chord line CHORD is indicated as overlapping with x-axis from (0, 0) to (1, 0).

At this point, the front portion 2100 may be located in a region where a distance from the leading edge LE is less than or equal to 40% of a distance from the leading edge LE to the trailing edge TE. In other words, the front portion 2100 may be located in a region where x/c is less than or equal to 0.4. More specifically, the front portion 2100 is a region where x/c is equal to or greater than 0 and less than or equal to k, and the rear portion 2300 is a region where x/c is greater than k and less than or equal to 1, and at this point, k is a value less than or equal to 0.4.

For example, the front portion 2100 may be a region where x/c is equal to or greater than 0 and less than or equal to 0.35. In this case, the rear portion 2300 may be a region where x/c is greater than 0.35 and less than or equal to 1. However, the front portion 2100 is not necessarily limited to the illustrated region, and the region may vary in the radial direction (direction R, referring to FIG. 3) of the airfoil 2000.

Preferably, in a section of the airfoil 2000 arranged in the hub or the middle region, the front portion 2100 may be formed in a region where x/c is less than or equal to 0.34. Preferably, in a section of the airfoil 2000 arranged in the tip region, the front portion 2100 may be formed in a region where x/c is less than or equal to 0.15, more preferably, x/c is less than or equal to 0.14. As described above, the length of the front portion 2100 may be shortened in a direction from the hub toward the tip, and the length of the rear portion 2300 may increase by the same amount.

According to the embodiment, the airfoil 2000 of the gas turbine 1000 is formed such that the maximum thickness of the rear portion 2300 is thicker than the maximum thickness of the front portion 2100. In other words, the location of maximum thickness LMT of the airfoil 2000 is not located at the front portion 2100, but is located at the rear portion 2300.

Specifically, the location of maximum thickness LMT may be located in a region where a distance from the leading edge LE is greater than 40% and less than 100% of a distance from the leading edge LE to the trailing edge TE. In normalizing this, the location of maximum thickness LMT may be located in a region where x/c is greater than 0.4 and less than 1. For example, in a section of the airfoil 2000 arranged in the hub, the location of maximum thickness LMT may exist in a location where x/c is equal to or greater than 0.45 and less than or equal to 0.5. For example, in a section of the airfoil 2000 arranged in the middle region, the location of maximum thickness LMT may exist in a location where x/c is equal to or greater than 0.48 and less than or equal to 0.53. For example, in the tip region, the location of maximum thickness LMT may exist in a location where x/c is equal to or greater than 0.54 and less than or equal to 0.59. As described above, the location of maximum thickness LMT of the airfoil 2000 may be closer to the trailing edge TE in the direction from the hub toward the tip.

Referring to FIG. 6, according to the embodiment of the present disclosure, the airfoil 2000 of the gas turbine 1000 may have a double arc structure in which two camber lines FCL and RCL are connected to each other. However, the structure is not necessarily limited thereto, and may vary in a range that can be used by those skilled in the art, such that three or more camber lines are connected to each other.

The camber line FCL, RCL is an arc formed by connecting center points between the suction surface 2110, 2310 and the pressure surface 2130, 2330. In the embodiment, the front camber line FCL is an arc formed by connecting center points between the suction surface 2110 of the front portion 2100 and the pressure surface 2130 of the front portion 2100, and the rear camber line RCL is an arc formed by connecting center points between the suction surface 2310 of the rear portion 2300 and the pressure surface 2330 of the rear portion 2300.

The front camber line FCL and the rear camber line RCL are connected to each other at a location where x/c = k. The camber line FCL, RCL has left derivation and right derivation equal to each other, based on x/c = k. For example, the camber line FCL, RCL may have 0 derivation at x/c = k. In other words, in the airfoil 2000 of the gas turbine 1000 according to the embodiment, the maximum camber location (location where difference between the camber line and the chord line is maximum) may be x/c = k.

The airfoil 2000 of the gas turbine 1000, according to the embodiment, has a chord ratio less than or equal to 0.4. The chord ratio is a ratio of the front camber line FCL with respect to the chord length. The front camber line FCL is formed to x/c = k, so that the chord ratio of the airfoil 2000 in the embodiment is specifically less than or equal to k. At this point, k may be less than or equal to 0.4.

For example, a section of the airfoil 2000 arranged in the hub or the middle region may be less than or equal to 0.34, and a section of the airfoil 2000 arranged in the tip region may have a chord ratio preferably less than or equal to 0.15, more preferably, less than or equal to 0.14.

In the embodiment, the curvature of the front camber line FCL is greater than the curvature of the rear camber line RCL. Therefore, air flowing along a surface of the airfoil 2000 has a turning angle, which is formed by the front portion 2100, greater than a turning angle, which is formed by the rear portion 2300.

More specifically, the airfoil 2000 the gas turbine 1000 according to the embodiment may have a camber ratio equal to or greater than 0.6. The camber ratio is a ratio of a turning angle formed by the front portion 2100, among the total turning angle of air flowing along the surface of the airfoil 2000 from the leading edge LE to the trailing edge TE. Therefore, a high camber ratio indicates that air is mostly turned while passing the front portion 2100, and accordingly, the curvature of the front portion 2100 is greater than the curvature of the rear portion 2300.

The camber ratio is calculated as a turning angle θ1 of the front portion 2100 / the total turning angle θ1+ θ2. The turning angle θ1 of the front portion 2100 may be calculated as an angle θ1 that is formed by a line L parallel to a direction of the leading edge LE and a line CHORD' parallel to the chord line CHORD. The turning angle θ2 of the rear portion 2300 may be calculated as an angle θ2 that is formed by a line T parallel to a direction of the trailing edge TE and a line CHORD' parallel to the chord line CHORD. The total turning angle θ1+ θ2 may be calculated by summing the turning angle θ1 of the front portion 2100 and the turning angle θ2 of the rear portion 2300.

In the embodiment, a camber ratio of the airfoil 2000 may be specifically equal to or greater than 0.6 and less than or equal to 0.9. More specifically, a camber ratio of the airfoil 2000 in the hub region and the middle region may be equal to or greater than 0.7 and less than or equal to 0.8. Specifically, in these regions, the camber ratio of the airfoil 2000 may be equal to or greater than 0.75 and less than or equal to 0.77. The camber ratio of the airfoil 2000 in the tip region may be equal to or greater than 0.8 and less than or equal to 0.9, preferably, may be equal to or greater than 0.85 and less than or equal to 0.9. As described above, the camber ratio of the airfoil 2000 may increase in the direction from the hub toward the tip. In other words, the curvature of the front portion 2100 may increase in the direction from the hub toward the tip.

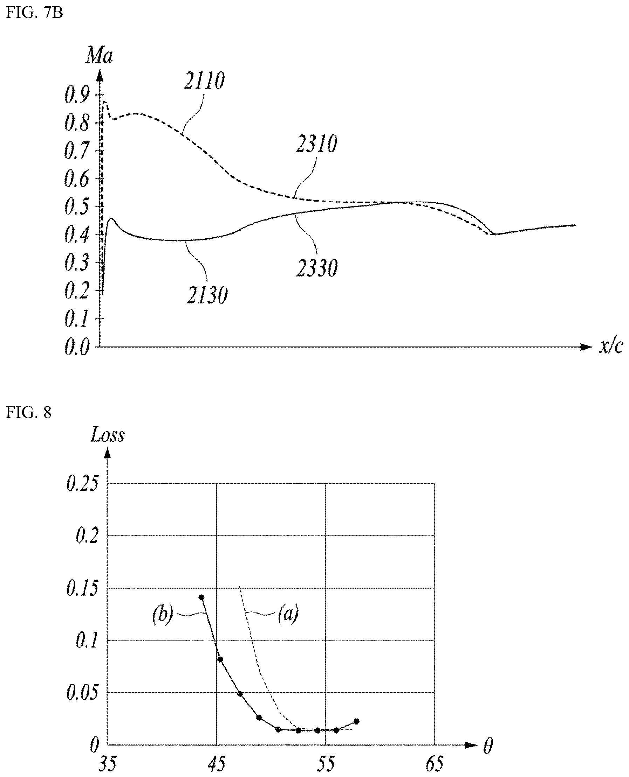

FIGS. 7A and 7B are views showing isentropic Mach number distribution of the airfoil of the gas turbine according to the embodiment of the present disclosure in comparison to the conventional airfoil.

Isentropic Mach number is a value obtained by converting static pressure of air flowing along a surface of the airfoil into velocity. Since the static pressure and flow velocity are inversely proportional, the static pressure at a relevant location can be determined through the flow velocity expressed as a Mach number. For example, a high Mach number indicates low static pressure at the relevant location, while a low Mach number indicates high static pressure there.

FIG. 7A is a view showing Mach number distribution on the suction surface and the pressure surface of the conventional airfoil, and FIG. 7B is a view showing Mach number distribution on the suction surface 2110, 2310 and the pressure surface 2130, 2330 of the airfoil according to the present disclosure.

In this graph, the x-axis indicates an x/c value, the left end of the graph is the leading edge, and the right end is the trailing edge. The y-axis indicates a Mach number, and the upper curved line indicates the suction surface, and the lower curved line indicates the pressure surface. Since the airfoil of the compressor collides with air, mostly at the pressure surface, to compress the air, in both FIGS. 7A and 7B, a Mach number of the pressure surface is lower than a Mach number of the suction surface, which indicates that static pressure of the pressure surface is greater than the suction surface (higher pressure is exerted).

As shown in FIG. 7B, the front pressure surface 2130 of the airfoil of the present disclosure has a Mach number that is significantly less than the front pressure surface of the airfoil in FIG. 7A. This means that static pressure of a flow exerted on the front pressure surface 2130 of the airfoil of the present disclosure is higher than that of the conventional airfoil in FIG. 7A. Accordingly, the pressure surface 2130 of the airfoil collides with the flow at a higher pressure than the conventional airfoil.

In FIG. 7B, it can be checked that a difference value in Mach numbers at the front suction surface 2110 and the front pressure surface 2130 of the airfoil is greater than that of FIG. 7A, and a difference value in Mach numbers at the rear suction surface 2310 and the rear pressure surface 2330 is less than that of FIG. 7A. This means that the difference in pressure of the front suction surface 2110 and the front portion of the pressure surface 2130 is greater than the difference in pressure of the rear portion of the suction surface 2310 and the rear portion of the pressure surface 2330.

The load of the airfoil is proportional in the pressure difference between the suction surface and the pressure surface, and as a result, FIG. 7 shows that higher load is on the front portion 2100 (referring to FIG. 6), and lower load is on the rear portion 2300 (referring to FIG. 6). In other words, according to the present disclosure, air is compressed at higher load at the front portion 2100 with greater curvature, and load is reduced in the rear portion 2300, thereby improving flow separation and wake occurrence, reducing energy loss, and improving compression efficiency and compression ratio.

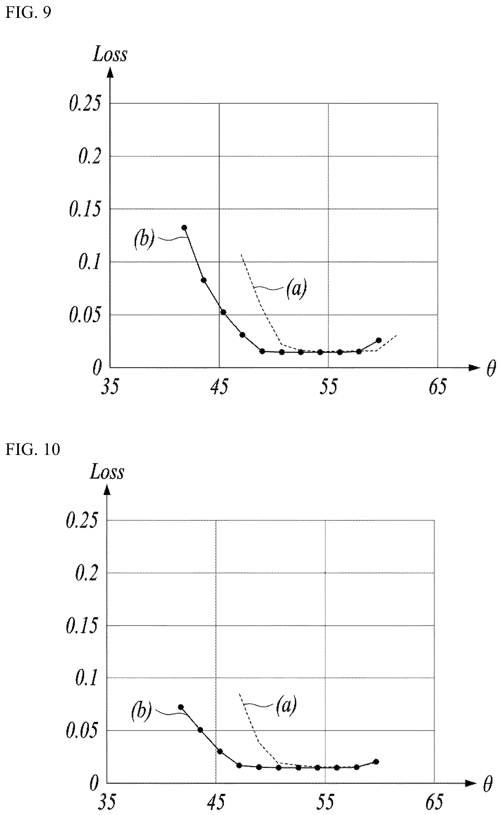

FIGS 8 to 10 show comparisons of the loss bucket with the conventional airfoil. FIG. 8 shows a comparison of the loss bucket in the tip region with the conventional airfoil. FIG. 9 shows a comparison of the loss bucket in the middle region with the conventional airfoil. FIG. 10 shows a comparison of the loss bucket in the hub region with the conventional airfoil.

The loss bucket is a graph representing a flow loss coefficient (Loss) according to a flow incidence angle. The loss coefficient is the loss ratio of total pressure and is proportional to the flow energy loss ratio.

The y-axis of the loss bucket indicates a loss coefficient (Loss) = (total pressure at flow inlet - total pressure at flow outlet)/total pressure of flow, and the x-axis indicates an incidence angle θ of flow with respect to a rotational shaft.

FIGS. 8 to 10 show successively the loss bucket of the airfoil in the tip region, the loss bucket in the middle region, and the loss bucket in the hub region. In each region, (a) indicates the conventional airfoil, and (b) indicates the airfoil 2000 of the gas turbine 1000 according to the embodiment. Specifications applied to the airfoil in each region according to the embodiment are described in Table 1.

**[Table 1]**

| **Figure** | **Chord ratio** | **Camber ratio** | **LMT** |
|---|---|---|---|
| Fig. 8(Tip) | 0.135 | 0.9 | 0.565 |
| Fig 9(Mid) | 0.327 | 0.765 | 0.507 |
| Fig. 10(Hub) | 0.331 | 0.761 | 0.475 |

Referring to FIGS. 8 to 10, across all the hub region, the middle region, and the tip region, for the same x value, the y value of the solid line is less than the y value of the dotted line. In other words, with the same incidence angle θ across all regions, it can be confirmed that the airfoil (b) of the present disclosure is reduced in pressure loss and energy loss of flow in comparison to the conventional airfoil (a). Accordingly, the compression efficiency and the compression ratio of the compressor 1100 of the gas turbine 1000 can be improved.

Furthermore, FIGS. 8 to 10 show that the solid graph is distributed over x values that are wider than those of the dotted graph. This indicates that the airfoil (b) of the present disclosure may be operated even in an incidence angle in a range wider than the conventional airfoil (a), across all the hub region, the middle region, and the tip region. Accordingly, the operational range of the compressor 1100 of the gas turbine 1000 can expand.

**[Table 2]**

| **Mach** | **chocking side** | **near design** | **stall side** |
|---|---|---|---|
| 0.56 | -17.62% | -4.88% | -6.35% |
| 0.66 | -29.37% | -5.60% | -4.27% |
| 0.76 | -27.58% | -6.25% | 4.19% |

**[Table 3]**

| **Mach** | **chocking side** | **near design** | **stall side** |
|---|---|---|---|
| 0.56 | -13.30% | -1.92% | -5.19% |
| 0.66 | -7.79% | -5.63% | -4.10% |
| 0.76 | -12.08% | -6.01% | -1.85% |

Table 2 shows the CFD results for the reduction rate of the loss coefficient in the airfoil 2000 of the embodiment in comparison to the conventional airfoil. Table 3 shows the results of the 2D test.

Each table shows the reduction rate of the loss coefficient, under three Mach number conditions (0.56, 0.66, 0.76), when flow is introduced from the suction surface rather than the leading edge (chocking side), when flow is introduced from the leading edge (near design), and when flow is introduced from the pressure surface rather than the leading edge (stall side). For example, referring to a chocking side value in the 0.66 Mach condition of Table 2, when flow is introduced from the suction surface rather than the leading edge (chocking side), it can be confirmed that the airfoil 2000 of the embodiment has a loss coefficient reduced by 29.37% compared to the conventional airfoil.

Referring to Tables 2 and 3, in both CFD and 2D tests, it can be seen that the airfoil 2000 of the embodiment has a lower loss coefficient than the conventional airfoil. This means that the airfoil 2000 of the present disclosure has reduced pressure and energy losses in the flow compared to the conventional airfoil described above. As a result, the compression efficiency and compression ratio of the compressor 1100 of the gas turbine 1000 can be improved.

In summary of the above description with reference to FIG. 5, according to the embodiment of the present disclosure, the airfoil 2000 used in the compressor 1100 of the gas turbine 1000 includes the pressure surface 2130 of the front portion 2100 formed concave more than the pressure surface 2330 of the rear portion 2300, so that the curvature of the front portion 2100 is greater than the curvature of the rear portion 2300. Furthermore, the maximum thickness of the rear portion 2300 is thicker than the maximum thickness of the front portion 2100, so that the location of maximum thickness LMT of the airfoil 2000 is located in the rear portion 2300.

According to the above structure, the load on the front portion 2100 increases, while the load on the rear portion 2300 decreases, thereby improving flow separation and wake formation. Accordingly, the energy loss of flow is reduced. As a result, compression efficiency and compression ratio of the compressor 1100 can be improved.

Furthermore, with the increasing curvature of the front portion 2100, flows at various incidence angles can be smoothly turned and move to the rear portion 2300, thereby expanding the operational range of the compressor 1100.

Although the preferred embodiments of the disclosure have been disclosed, those skilled in the art will appreciate that various modifications, additions, substitutions, and deletions of components are possible, without departing from the scope of the present disclosure as disclosed in the accompanying claims, and this is also included within the scope of rights of the present disclosure.

## Claims

1. An airfoil comprising:
a front portion (2100) extending rearward from a leading edge; and
a rear portion (2300) extending from the front portion (2100) to a trailing edge,
**characterised in that**
a pressure surface (2130) of the front portion (2100) is concave more than a pressure surface of the rear portion (2300).

2. The airfoil of claim 1, wherein the front portion (2100) is located in a region where a distance from the leading edge is less than or equal to 40% of a distance from the leading edge to the trailing edge.

3. The airfoil of claim 1 or 2, wherein the front portion (2100) has a greater curvature than the rear portion (2300).

4. The airfoil of any one of the preceding claims, further comprises:
a front camber line formed along center points between the pressure surface (2130) and a suction surface (2110) of the front portion (2100); and
a rear camber line formed along center points between the pressure surface (2330) and a suction surface (2310) of the rear portion (2300),
wherein the front camber line has a greater curvature than the rear camber line.

5. The airfoil of any one of the preceding claims, wherein a ratio of a turning angle formed by the front portion (2100) to a total turning angle of air flowing from the leading edge to the trailing edge is equal to or greater than 0.6.

6. The airfoil of claim 5, wherein a ratio of a turning angle formed by the front portion (2100) to the total turning angle is less than or equal to 0.9.

7. The airfoil of any one of the preceding claims, wherein a maximum thickness of the rear portion (2300) is thicker than a maximum thickness of the front portion (2100).

8. The airfoil of any one of the preceding claims, wherein a maximum thickness location of the airfoil (2000) is located in the rear portion (2300).

9. The airfoil of claim 8, wherein the maximum thickness location is located in a region where a distance from the leading edge is greater than 40% and less than 100% of a distance from the leading edge to the trailing edge.

10. A gas turbine comprising:
a compressor (1100) configured to compress inflow air, and comprising multiple stages of compressor blades (1110) installed radially, and a compressor vane (1130) installed between the multiple stages of compressor blades (1110);
a combustor (1200) configured to mix and burn air compressed by the compressor (1100) with fuel; and
a turbine (1300) configured to generate power with gas burned by the combustor (1200),
wherein at least one of the compressor blade (1110) and the compressor vane (1130) comprises an airfoil (2000), wherein the airfoil (2000) comprises:
a front portion (2100) extending rearward from a leading edge; and
a rear portion (2300) extending from the front portion to a trailing edge,
**characterised in that** a pressure surface (2130) of the front portion (2100) is concave more than a pressure surface (2330) of the rear portion (2300).

11. The gas turbine of claim 10, wherein the front portion (2100) is located in a region where a distance from the leading edge is less than or equal to 40% of a distance from the leading edge to the trailing edge.

12. The gas turbine of claim 10 or 11, wherein the front portion (2100) has a greater curvature than the rear portion (2300).

13. The gas turbine of any one of claim 10, 11 or 12, wherein a ratio of a turning angle formed by the front portion (2100) to a total turning angle of air flowing from the leading edge to the trailing edge is equal to or greater than 0.6 and less than or equal to 0.9.

14. The gas turbine of any one of claim 10, 11, 12 or 13, wherein a maximum thickness location of the airfoil (2000) is located in the rear portion (2300).

15. The gas turbine of claim 14, wherein the maximum thickness location is located in a region where a distance from the leading edge is greater than 40% and less than 100% of a distance from the leading edge to the trailing edge.
